**Europäisches Patentamt**

**European Patent Office**

**Office européen des brevets**

(19)

(11) Publication number: **0 129 272**

**A1**

(12) # EUROPEAN PATENT APPLICATION

(21) Application number: **84200769.2**

(22) Date of filing: **28.05.84**

(51) Int. Cl.³: **B 01 D 53/18**
**B 01 D 3/28, F 28 F 25/08**
**F 28 F 3/02**

(30) Priority: **27.05.83 NL 8301901**

(43) Date of publication of application:
**27.12.84 Bulletin 84/52**

(84) Designated Contracting States:
**AT BE CH DE FR GB IT LI LU NL SE**

(71) Applicant: FDO Technische Adviseurs B.V.
Oostenburgermiddenstraat 62
NL-1018 MS Amsterdam(NL)

(72) Inventor: Van den Elst, Fredrik M.N.
Bornerbroeksestraat 461
NL 7609 PK Almelo(NL)

(74) Representative: 't Jong, Bastiaan Jacobus et al,
OCTROOIBUREAU ARNOLD & SIEDSMA Sweelinckplein 1
NL-2517 GK 's-Gravenhage(NL)

(54) **Device for carrying out a substance exchange process.**

(57) A device (1) for carrying out a substance-exchanging process between at least two fluids comprising a chamber (2) having inlet and outlet ducts for the fluids and a distributing filling, and means for supplying or extracting heat to and from the fluids. The chamber (2) is formed by a plurality of narrow channels (3) bounded each by two partition plates (5). The distributing filling consists of a filling element (4) in each channel (3) in the form of a plurality of zig-zag-shaped strips (31), extending vertically side by side and being in thermal contact by alternating crests (36, 37) with the opposite partition plates (5), and being shifted with respect to the adjacent strips. Between every two opposite partition plates (5) of adjacent channels (3) a channel (6) is formed for a heat transport medium.

EP 0 129 272 A1

./...

FIG.1

Device for carrying out a substance exchanging process
----------------------------------------------------------------

The invention relates to a device for carrying out a substance exchanging process between at least two fluids comprising a chamber having inlet and outlet ducts for the fluids and a distribution filling and means for supplying or conducting away heat to or from the fluids.

Such devices for substance exchange processes are generally known. The term substance exchange is to be understood to mean herein processes such as absorption, desorption and rectification.

If a device of the kind set forth above is used for absorption the fluids are formed by a liquid absorbent and a gas or a vapour. The distribution filling serves to distribute the absorbent in the form of a film on a large surface and for obtaining by the force of gravity of the absorbent such a flow that the fluid on the film surface is mixed with the further fluid so that the surface fluid is each time "refreshed", which results in satisfying absorption.

Substance exchanging processes are, in general, attended with enthalpy variation so that heat is released or absorbed. For example, in the absorption of vapour heat is released, whereas in rectification on the one hand heat is supplied and on the other hand heat is conducted away and with desorption heat is supplied. With a process such as absorption it is common practice to conduct away the released heat by cooling the absorbent after it has left the absorber.

For their capacities the known devices generally occupy relatively much space; they are, therefore, expensive, whilst it is difficult to carry out the substance exchanging process with a satisfying degree of efficiency.

The object of the present invention is to provide a device of the kind set forth in the preamble, which ensures high efficiency of the substance exchanging process, whilst the costs of manufacture are acceptable.

In a device embodying the invention this is achieved in that the chamber is formed by a plurality of narrow channels bounded each by two partition plates, in that the distributing filling consists of a filling element in each channel in the form of a plurality of zig-zag-shaped strips, extending vertically side by side and being in thermal contact by alternative crests with the opposite partition plates, and being shifted with respect to the adjacent strips and in that between every two opposite partition plates of adjacent channels a channel is formed for a heat transport medium. In this way a construction of the substance exchanging device is obtained which is known for the major part in the use as a heat exchanger. Owing to the specific shape of the filling element a satisfactory distribution of the fluids and in particular of fluids in the liquid state as in the case of absorption the liquid absorbent is automatically obtained on the available surface in the channels. Consequently it is not necessary to use complicated distribution ducts and the like. In addition, the fluid is prevented from contracting to jets in downward direction, since when flowing downwards the fluid remains spread along the width of the filling element. Moreover during the flow of the absorbent through the channel continuous contact occurs with the partition plates so that heat transport towards or from the heat transport medium takes place. Heat transport also occurs through the filling element towards or from the fluid, for example, the absorbent. Hence the substance exchange does not take place adiabatically. For thermo-dynamic reasons it will be obvious that the substance exchanging process can thus be performed with high efficiency.

In a preferred embodiment of the invention the shape of the filling element is such that each strip is shifted with respect to the adjacent strips by half the distance between two adjacent crests pointing towards the same side. Thus on both sides of the filling element identical, inclined "channels" are formed between the respective partition plate and the successive, off-set, depressed parts of the strips. Consequently the fluids satisfactorily spread along these inclined channels throughout the surface of the filling element and the partition plates, which is conducive to a satisfying, non-adiabatic substance exchange.

A structurally advantageous design is obtained when the sloping faces of the zig-zag-shaped strips have a form off-set in a transverse direction over part of their width. The connections between the neighbouring zig-zag strips are located at the off-set parts so that the material is bent rather than torsioned. The zig-zag angle may have any desired acuteness without the risk of rupture of the material. By suitable choice of the direction in which the shapes of the successive, inclined faces of the zig-zag-shaped strips alternate, said "channels" can be uninterrupted over the desired length. This means that, if the properties of the fluid require it, the "channels" can also be very short.

These embodiments of the invention operate particularly satisfying for a very large number of fluids. However, in those cases in which a fluid having relatively high cohesion has to flow through the channels provided with the filling elements there is the risk that the fluid moves for an important part along the "channels" and should not sufficiently spread along the surfaces of the filling element. For such a case is used a further development of the device according to the invention in which the filling element has the shape of a plurality of first strips of symmetric zig-zag shape having crests flattened over a distance at least equal to one quarter of the wavelength, alternating with a plurality of second strips of asymmetric zig-zag shape, whilst two consecutive first strips are relatively shifted over at least one quarter of the wavelength and at the most over said distance, and the zig-zag shape of the second strips is such that the flanks inclined in one direction are located in the same plane as the correspondingly inclined flanks of the first strip adjacent on one side and the flanks inclined in the other direction are located in the same plane as correspondingly inclined flanks of the first strip adjacent the other side. In this embodiment the fluid is compelled to move through the openings in the filling element during its passage through the channel. Since the filling element is, moreover, fully symmetrical, there is no preferential direction of flow so that the fluid will spread along the whole channel.

The strip parts extending between the crests are preferably at least substantially flat so that the liquid fluids flow each time over the shortest possible distance from these strip parts towards the adjacent partition plate in order to ensure maximum heat transfer. The fluid arriving at such a strip part thus flows each time along a partition plate towards the next following strip part.

When the channels for the heat transport medium are provided with a similar filling element as the channels for the exchange fluids a uniform device, consequently, of low costs is obtained.

According to the invention the heat transport medium may be formed by at least one fluid carrying out a process modifying its enthalpy. According as heat supply or heat extraction is required, this process may be evaporation or condensation.

In a further embodiment of the invention the heat transport medium is formed by a second set of fluids carrying out a substance exchanging process. In this case a filling element of the kind described above will be preferably used in the channels for this second set of fluids. In an appropriate practical form of this embodiment of the invention the first set of fluids carries out an absorption process, whilst the absorbent flows from top to bottom, whereas the second set of fluids carries out a desorption process whilst the mixture flows from bottom to top. Consequently the two streams of fluids exchange heat in counter-current and the device may be constructed so that any additionally required heat supply or extraction takes place at the desired areas. The latter embodiment in which an absorption and a desorption process are simultaneously performed is particularly suitable for use in a sorption heat pump. Owing to the direct heat exchange between the absorption and the desorption process high efficiency is obtained.

The invention furthermore relates to and provides a device for manufacturing a filling element in one of the first-mentioned embodiments. The device is characterized by a frame, a first pressing mould part connected with the frame, a second pressing mould part movably guided with respect to the first pressing mould part and co-operating herewith, pressing means for moveing the mould parts relatively to one another and a transport device for passing sheet-like material between the mould parts stepwise and in synchronism with the pressing means, the pressing mould parts having a sequence of pressing segments lying side by side and forming each alternately half a zig-zag wave upwards and downwards, and by transversely displacing means for a stepwise displacement transverse of the transport direction of the mould parts and the sheet of material relatively to one another. The magnitude of the stepwise displacement transverse of the transport direction can be set at will and if desired, the displacement may be carried in a number of successive pressing operations in the same direction ans subsequently in a next number of pressing operations in the opposite direction. In this manner a single set of mould parts permits of manufacturing a large number of different embodiments of filling elements.

An advantageous embodiment of said manufacturing device is obtained when the pressing segments are separate, alternately identical parts. The mould parts can thus be made to the desired length from standard elements, which results in an advantageous cost price.

From EP-A-0 070 917 there is known a distribution filling for a substance-exchange column. The filling comprises a plurality of crossing strips. The filling element does not exhibit the form of a plurality of strips extending vertically side by side and being in thermal contact with respect to the adjacent, shifted, zig-zag-shaped strips by alternating crests with opposite partition plates. Moreover, the patent application concerned relates to a substance exchanging device in which the substance exchanging process if performed adiabatically.

The invention will be described more fully hereinafter with reference to the accompanying drawings.

Fig. 1 is a partial sectional view and a fragmentary elevational view of a substance-exchanging device embodying the invention.

Fig. 2 is a fragmentary perspective view of a substance-exchange channel of the device of Fig. 1.

Fig. 3 shows a further embodiment of the substance-exchange channel.

Fig. 4 shows a still further embodiment of the substance-exchange channel.

Fig. 5 schematically shows a device for manufacturing filling elements used in the embodiments of Figs. 2 to 4.

Fig. 6 shows another embodiment of the substance-exchange channel.

Fig. 7 schematically illustrates the method of manufacturing the filling element used in the substance-exchange channel of Fig. 6.

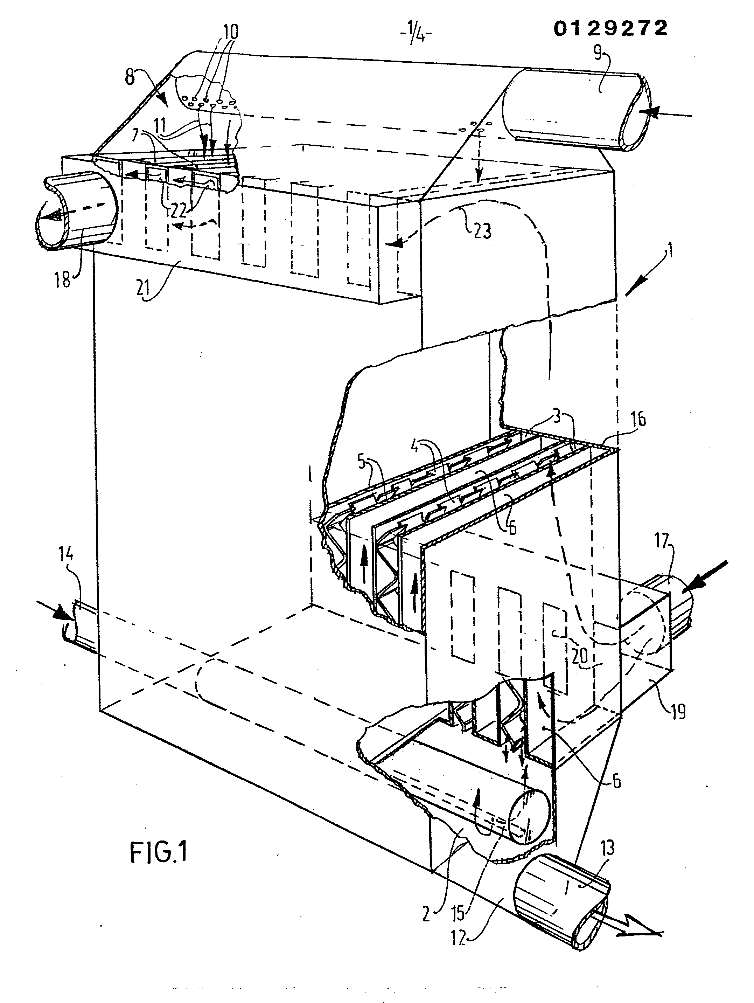

The device shown in Fig. 1 is particularly intended for carrying out an absorption process. Below in the device 1 a vapour to be absorbed is fed through the vapour inlet 14. The liquid absorbent is fed at the top of the device 1 through the inlet 9 and conducted away below from the device through the outlet 13.

The absorption process takes place in a chamber 2 formed in accordance with the invention by a plurality of narrow channels 3. Each channel 3 is bounded by two partition plates 5. The channels 3 accommodate a distribution element 4, which will be described in detail hereinafter. Between every two proximal partition plates 5 of neighbouring channels 3 channels 6 are formed for a cooling medium. This coolant is fed to the device 1 through the inlet 17 and conducted away through the outlet 18.

The set of plates 5 is surrounded by a casing 16, on top of which is arranged a hood 8 and on the underside is arranged a hood 12. The hoods 8 and 12 together with the casing 16 constitute a closed space. The channels 3, in which the absorption process takes place, are open at the top and at the bottom. The absorbent feed 9 is prolonged in a distribution tube above in the hood 8. The distribution tube has a plurality of holes 10 through which the absorption fluid can drip into the channels 3 as indicated by arrows 11. By gravity the absorbent flows down through the channels 3 and is finally collected in the trough 12, from which it is evacuated through the outlet 13. The vapour feed 14 is prolonged in the hood 12 in a tube provided on the underside with a distribution slot 15. The vapour flows through this slot into the channels 3. Owing to the absorption occurring in the channels 3 a vapour pressure occurs so that the vapour flows upwards in the channels 3. During this rise of the vapour it comes into contact with the absorbent and is absorbed thereby.

According to the invention the heat released by this absorption is directly conducted away by a heat transport medium flowing through the channels 6 adjacent the substance-exchange channels 3. For the supply of the heat transport medium, which in this case is a coolant, the channels 6 are open on the rear bottom side of the device 1. These openings 20 are enclosed by a hood 19 into which opens out the coolant inlet 17. The coolant can thus arrive through the hood 19 and the apertures 20 into the channels 6. On the top front side of the device 1 the coolant channels 6 are open in the same manner. These openings 22 are surrounded by a hood 21, which communicates with the medium outlet 18. The coolant thus flows in the direction of the arrow 23 from the inlet 17 through the channels 6 to the outlet 18.

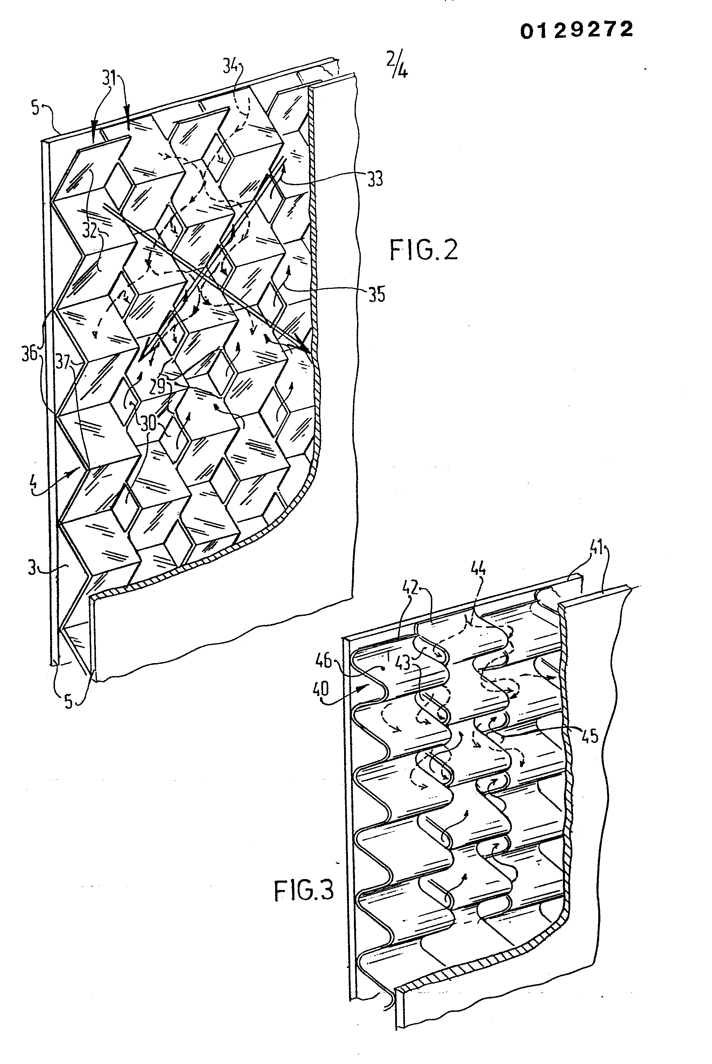

Fig. 2 clearly shows the shape of the filling elements used in the device of Fig. 1. The filling element 4 has, in accordance with the invention, the shape of a plurality of zig-zag-shaped strips 31 extending vertically side by side. The adjacent strips 31 are relatively shifted over half the distance between two adjacent crests (for example 36) directed towards the same side. The strips 31 are connected with the crests 36, 37 alternately with the opposite partition plates 5. This connection establishes a thermal contact with the partition plates 5 and it may be a soldering joint. In the embodiment shown the filling element 4 is made from a single sheet of material. The strips 31 are made in the sheet by a known pressing process. The strips 31 are interconnected at 29. During the shaping operation openings 30 are formed between the adjacent strips. These openings are lying in a vertical plane. The absorption fluid, the flow of which is indicated by broken lines 34, is thus compelled to deflect laterally. There is no possibility of a direct, vertical flow for the absorbent. According to the invention the strip portions extending between the crests 36, 37 are at least substantially flat. It is thus ensured that the fluid arriving at the strip portion 32 directly flows towards the adjacent partition plate 5. When the fluid has arrived at the end of the strip portion 32 at the partition plate 5, it flows laterally away, whilst it partially flows through the subjacent opening 30 to the other side of the strip. The fluid then flows in a similar manner towards the opposite partition plate 5 and then again to one side. Apart from a heat exchange through the strip portions 32 exchanging contact with the partition plates 5 is each time established. In particular the surface layer of the fluid film comes into contact with the partition plates 5. In this surface layer the absorption occurs so that it has the highes temperature. The resultant absorption heat is thus conducted away for an important part directly and not through the fluid film in the filling element to the cooling medium. The vapour indicated by the solid arrows 35 flows upwards through the opening 30 and is gradually absorbed by the absorbent. Since the absorbent flows from one strip portion to the other, a satisfactory mixing with the absorbent takes palce so that a vapour-saturated surface is directly replaced by unsaturated fluid.

As stated above, the strips 31 in the embodiment shown are relatively shifted over half the distance between two adjacent crests 36. Thus between the respective partition plates 5 and the side concerned of the filling element inclined "channels" are formed. They are indicated by the double arrows 33. Owing to this property a drop of absorbent supplied at a given place above in the channel 3 will rapidly spread i.e. over a small vertical distance, along the width of the channel 3. It is thus ensured that the overall surface of the filling element 4 is wetted so that a maximum absorption surface is obtained.

The filling element 40 shown in Fig. 3 also comprises a plurality of zig-zag-shaped strips 42 extending vertically side by side arranged between partition plates 41. The strips 42 may also in this case be formed from a single sheet of material. The zig-zag-shape of the filling element 40 is more rounded off. Moreover the adjacent strips 42 are relatively shifted over a smaller distance than half the distance between two adjacent crests.

It is thus ensured that the openings 43 between the adjacent strips 42 have the shape of a slot. Moreover, the slope of the strip portions 46 is relatively slight. The fluid will, therefore, flow less rapidly through the channel. According to circumstances it may be desired to increase the residence time of the absorbent in the channel in order to achieve maximum absorption. In Fig. 3 the solid arrows 45 indicate the upwardly directed vapour flow.

The proportions of the filling element are such that the fluid with which the device has to be used can freely pass through the openings between the strips without the formation of a skin across the openings 30. If the openings should be blocked by a skin, the vapour stream would be hindered, which would be detrimental to a satisfactory operation. The size of the openings and hence of the zig-zag shape can be simply determined empirically.

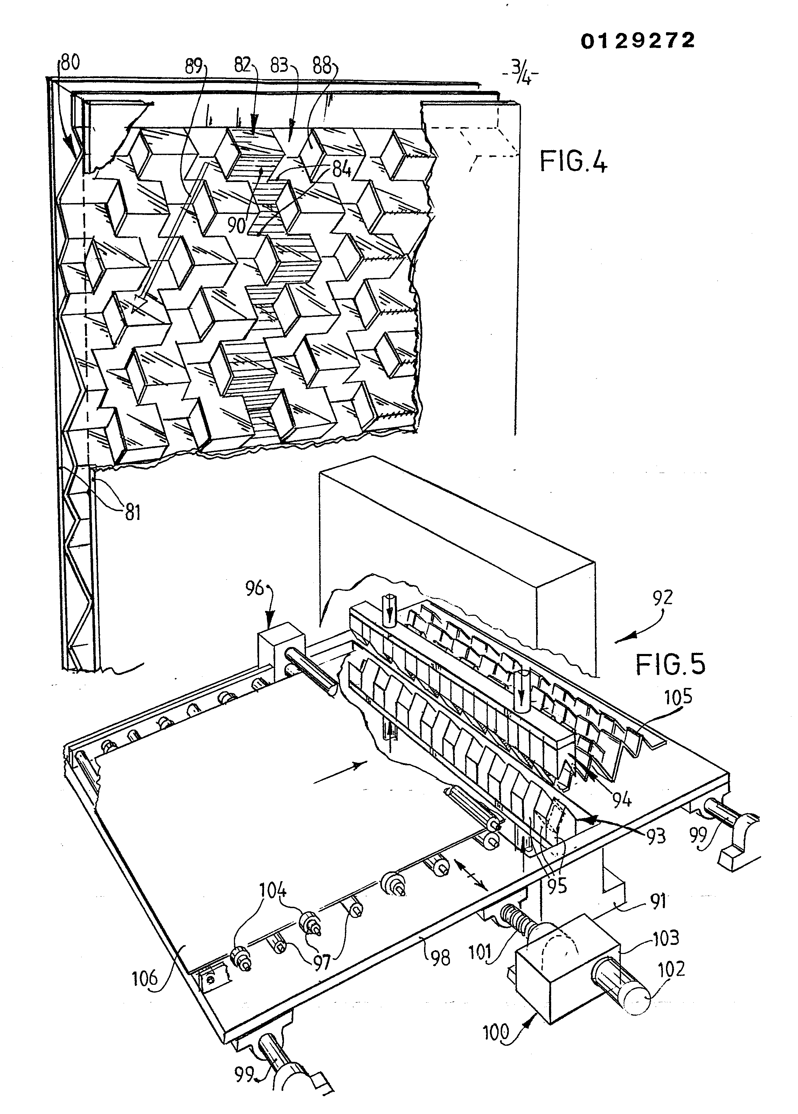

Fig. 4 shows a part of a device embodying the invention corresponding with Figs. 2 and 3. The channel bounded by two plates 81 comprises a filling element 80 in a further advantageous embodiment of the invention. The filling element 80 may again be considered to be composed of a plurality of zig-zag-shaped strips 82, 83, which are relatively off-set in the longitudinal direction. For the sake of clarity a strip 82 is indicated darker in Fig. 4. It will be apparent that the inclined faces 90 of the strips 82, 83 have a shape off-set in a transverse direction by part of their width. At the area of the off-set 84 the adjacent strips are interconnected. The material of the filling element 80 is bent at the area of these joints 84 rather than torsioned like in the embodiments of Figs. 2 and 3. This allows of using larger angles of bending without breakdown of the material. In the manner described above openings 88 are formed between the adjacent strips 82 and 83. In the embodiments hown in Fig. 4 the shape of the inclined faces 90 is chosen so that a face off-sets twice in one direction and then twice in the other direction, and so on. With the strip 82 the shape of the inclined faces 90 first shifts twice to the right and then twice to the left and again twice to the right and so on. This results in that the inclined "channels", one of which is indicated by the arrow 89, have only limited length matching the requirements of the fluid. In accordance with these requirements the embodiments shown in Fig. 4 can be modified. These modifications may concern the magnitude of the lateral shift, the direction of shift of the consecutive inclined faces, the apex of the zig-zag waves and so forth.

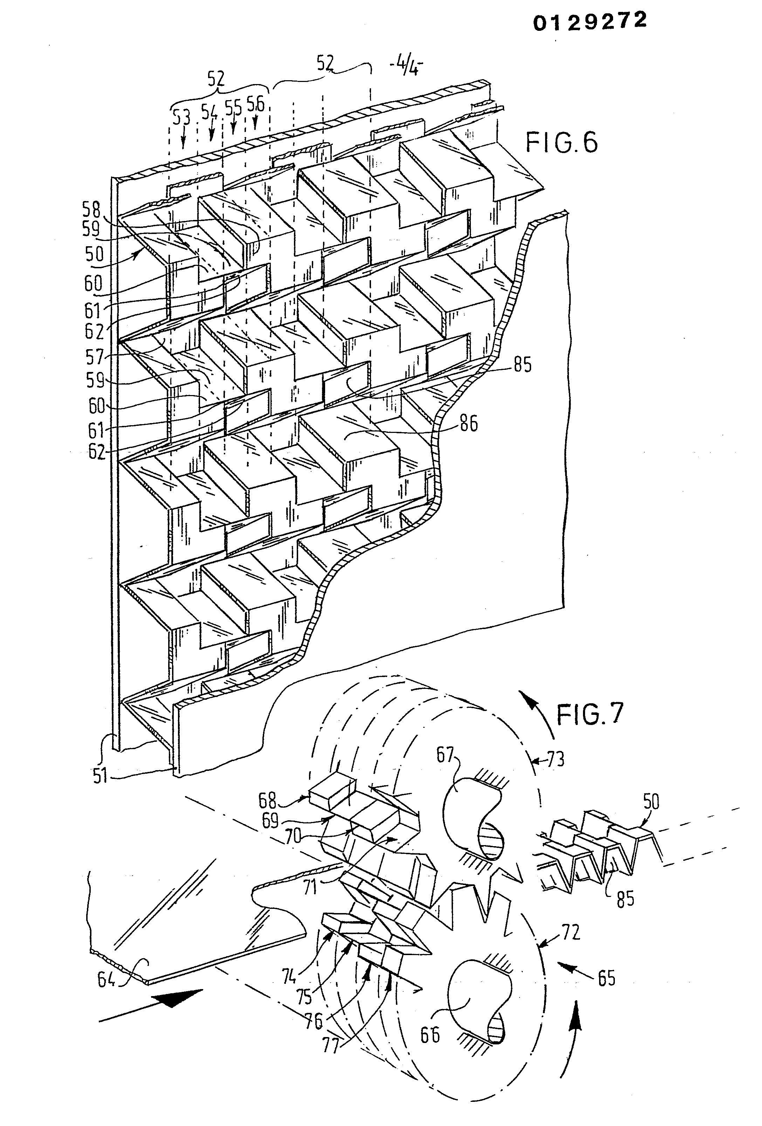

A device by means of which filling elements as shown in Figs. 2 to 4 can be manufactured is shown in Fig. 5. This device 92 comprises a frame 91, a pressing mould part 93 connected with the frame 91, a second mould part 94 co-operating with the first mould part 93 and being adapted to move in known manner towards and away from the first mould part for carrying out a pressing process on a sheet of material 106 supplied between the mould parts. The pressing mould parts 93, 94 are built up from segments 95 which are alternately identical. The material 106 is fed between the mould parts 93, 94 with the aid of a transport device 96 comprising two driving rollers, between which passes the sheet 106. The transport device furthermore comprises a plurality of guide rollers 97 for guiding the sheet.

The transport device 96 is mounted on a table 98 supported by transverse guides 99. With the table 98 is coupled a transversely displacing device 100. This device 100 comprises a screw spindle 101 driven by a motor 102 through a transmission 103. The transversely displacing device 100 can displace the sheet of material 106 transversely of the transport direction with respect to the mould parts 93, 94. When prior to each pressing stroke the transversely displacing device 100 displaces the table 98 and hence the sheet of material 106 over substantially the width of a segment 95, a filling element of the kind shown in Fig. 2 is obtained. By carrying out the transverse displacement in order of succession twice in one direction and twice in the other direction the resultant filling element 105 assumes the shape of the filling element 80 shown in Fig. 4. As shown some of the guide rollers 97 of the transport device are provided with lateral stops 104, which ensure that the sheet of material 106 is carried along correctly in the transverse direction.

Fig. 6 shows a different embodiment of a part of a device according to the invention corresponding to Figs. 2, 3 and 4. The channel bounded by two plates 51 is provided with a filling element 50 in a preferred embodiment of the invention. The filling element 50 may be considered to be built up from a plurality of groups 52 of zig-zag-shaped strips. Each group 52 in this embodiment comprises two first strips 54, 56 alternating with second strips 53, 55. The first strips 54, 56 have a symmetrical zig-zag shape and flattened crests over a distance equal to one quarter of the wavelength. These flattened crests are designated for strip 54 by reference numeral 57 and for strip 56 by reference numeral 58. The faces determined by these crests are connected with the plates 51. The two consecutive first strips 54, 56 are relatively offset by one quarter of the wavelength corresponding to the length of the flattened crest. The second strips 53, 55 have an asymmetric zig-zag shape. The flanks 59 of the strip 55 inclined forwardly as shown in Fig. 6 are located in the same plane as the forwardly inclined flanks 60 of the strip 54 on the left hand side thereof. The rearwardly inclined flanks 61 of the asymmetric strip 55 are coplanar with the rearwardly inclined flanks 62 of the strip 56 on the right-hand side of the strip 55. Thus in general the flanks inclined in one direction are coplanar with correspondingly inclined flanks of the first strips adjacent one side and the flanks inclined in the other direction are coplanar with correspondingly inclined flanks of the first strips adjacent the other side.

In this way it is achieved that the crests of the filling element 50 projecting towards one plate 51 form uninterrupted, horizontal contact faces or lines with these plates 51 so that the fluid passing through the channel is compelled to flow through the openings 85 into the filling element 50. It is furthermore ensured in this embodiment that below every opening 85 is located a face 86 extending on both sides over a width of a strip so that it is ensured that the fluid comes into contact with the face 86 over at least a considerable part. With a low adhesion as compared with the cohesion of the fluid with respect to the material of the filling element 50 and the plates 51 a satisfactory distribution along the channel and a satisfactory contact with the filling element 50 and the plates 51 are nevertheless ensured.

Fig. 7 schematically shows how a filling element 50 can be made from a flat sheet 64. The device 65 used thereto comprises two opposite shafts 66, 67 journalled in a frame (not shown), on which groups of gear wheels 72 and 73 respectively are mounted. The opposite gear wheels of the groups 72, 73 are complementary and held in mesh. Two opposite gear wheels depress each time one zig-zag-shaped strip. Thus the gear wheels 71 and 77 together form a strip such as the strip 53 in Fig. 6 with an asymmetric zig-zag shape. The gear wheels 69 and 75 together form a further asymmetric zig-zag strip, whereas the pairs of gear wheels 70, 76 and 68, 74 form symmetric zig-zag strips such as the strips 54 and 56 of Fig. 6 in the plate 64. Between obliquely opposite gear wheels such as the gear wheels 70 and 77 or 71 and 76 a scissor effect occurs ensuring the formation of the openings 85 during the deformation of the sheet 64 to the filling element 50.

The filling elements shown in Fig. 2 and 3 can be formed in a similar manner from a flat sheet. In this embodiment the gear wheels on the co-operating shafts may all have the same form and be relatively shifted in a suitable manner on these shafts. It will be obvious that the manufacture of the filling element 4 in the manner shown in Fig. 7 requires three different gear wheels, two for the formation of a symmetric zig-zag strip, which gear wheels are identical, whereas two gear wheels for the formation of an asymmetric zig-zag strip are different.

As stated above, a filling element may also be used in the channels 6 for the heat transport medium in order to improve the heat transfer. The shape of the filling element depends on the required heat transfer and the flow behaviour of the heat transport medium. The filling element for the heat transport medium channels may advantageously have the same form as that for the substance-exchange channels so that a rational production of the device embodying the invention can be carried out.

For a satisfactory heat transferring contact between the partition plates and the filling elements and also for a relative hermetic seal of the various channels it is advantageous to solder the entire device. This technique is known per se for the manufacture of heat exchangers.

Eur.pat.appln. 84200769.2; encl.
with letter of June 26, 1984
0129272

1

C L A I M S
------------

1. A device for carrying out a substance-exchanging process between at least two fluids comprising a chamber having inlet and outlet ducts for the fluids and a distributing filling, and means for supplying or extracting heat to and from the fluids c h a r a c t e r i z e d  in that the chamber is formed by a plurality of narrow channels bounded each by two partition plates, in that the distributing filling consists of a filling element in each channel in the form of a plurality of zig-zag-shaped strips, extending vertically side by side and being in thermal contact by alternating crests with the opposite partition plates, and being shifted with respect to the adjacent strips and in that between every two opposite partition plates of adjacent channels a channel is formed for a heat transport medium.

2. A device as claimed in Claim 1 c h a r a c t e r - i z e d  in that each strip is shifted with respect to the adjacent strips over half the distance between two adjacent crests directed towards the same side.

3. A device as claimed in Claim 1 or 2 c h a r a c - t e r i z e d  in that the inclined faces of the zig-zag-shaped strips have a shape offset in transverse direction over part of their width.

4. A device as claimed in Claim 1 c h a r a c t e r - i z e d  in that the filling element has the shape of a plurality of first strips of symmetric zig-zag shape having crests flattened over a distance at least equal to one quarter of the wavelength, alternating with a plurality of second strips of asymmetric zig-zag shape, whilst two consecutive first strips are relatively shifted over at least one quarter of the wavelength and at the most over said distance, and the zig-zag shape of the second strips is such that the flanks inclined in one direction are located in the same plane as the correspondingly inclined flanks of the first strip adjacent on one side and the flanks inclined in the other direction are located in the same plane as correspondingly inclined flanks of the first strip adjacent the other side.

5. A device as claimed in anyone of the preceding Claims c h a r a c t e r i z e d in that the strip portion extending between the crests are at least substantially flat.

6. A device as claimed in anyone of the preceding Claims c h a r a c t e r i z e d in that the channels for the heat transport medium are provided with the same filling element as the channels for the substance-exchange fluids.

7. A device as claimed in anyone of the preceding Claims c h a r a c t e r i z e d in that the heat transport medium is formed by at least one fluid carrying out a process altering its enthalpy.

8. A device as claimed in Claims 6 and 7 c h a r a c - t e r i z e d in that the heat transport medium is formed by a second set of fluids carrying out a substance-exchange process.

9. A device for manufacturing a filling element for use in a device as claimed in anyone of Claims 1 to 3 c h a r a c t e r i z e d by a frame, a first pressing mould part connected with the frame, a second pressing mould part movably guided with respect to the first pressing mould part and co-operating herewith, pressing means for moving the mould parts relatively to one another and a transport device for passing sheet-like material between the mould parts stepwise and in synchronism with the pressing means, the pressing mould parts having a sequence of pressing segments lying side by side and forming each alternately half a zig-zag wave upwards and downwards, and by transversely displacing means for a stepwise displacement transverse of the transport direction of the mould parts and the sheet of material relatively to one another.

10. A device as claimed in Claim 9  c h a r a c t e r - i z e d  in that the pressing segments are separate, alternately identical parts.

FIG.1

FIG.2

FIG.3

0129272

-3/4-

FIG.4

FIG.5

FIG.6

FIG.7

0129272

European Patent
Office

**EUROPEAN SEARCH REPORT**

Application number

EP 84 20 0769

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | NL-C- 102 363 (G.G. HASELDEN) <br> * figure 1; column 3, line 18 - column 4, line 15 * | 1,6 | B 01 D 53/18 <br> B 01 D 3/28 <br> F 28 F 25/08 <br> F 28 F 3/02 |
| Y | DE-A-1 501 375 (ESCHER WYSS) <br> * figures 2,3,6; page 5, paragraph 3 - page 6, paragraph 3 * | 1-3 | |
| A | FR-A-2 192 282 (UNION CARBIDE) <br> * figure 6 * | 1 | |
| A | DE-A-2 032 293 (FAIGLE HEINZ HARD) | | |
| A | GB-A-1 158 766 (R. PRIESTLEY) | | |
| | | | **TECHNICAL FIELDS SEARCHED (Int. Cl. ³)** |
| | | | B 01 D 53/00 <br> F 28 F 25/00 <br> F 28 F 3/00 |

The present search report has been drawn up for all claims

| Place of search | Date of completion of the search | Examiner |
|---|---|---|
| THE HAGUE | 10-09-1984 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82